# EUROPÄISCHE PATENTSCHRIFT

(11) **EP 0 555 796 B1**
(45) Veröffentlichungstag und Bekanntmachung des Hinweises auf die Patenterteilung: **17.04.1996**
(21) Anmeldenummer: 93101912.9
(22) Anmeldetag: 08.02.1993
(51) Int. Cl.: G05B 19/18

(54) **Werkzeugmaschine mit einer automatischen Wärmedehnungs-Kompensationseinrichtung**
Machine-tool with an automatic device for compensation of thermal expansion
Machine-outil avec un dispositif automatique de compensation de dilatation thermique

(30) Priorität: 12.02.1992 DE 4203994
(43) Veröffentlichungstag der Anmeldung: 18.08.1993
(73) Patentinhaber: Maschinenfabrik Berthold Hermle Aktiengesellschaft, D-78559 Gosheim (DE)
(72) Erfinder: Hermle, Karl-Heinz, W-7209 Gosheim (DE); Zeh, Manfred, W-7209 Gosheim (DE)
(74) Vertreter: Vetter, Hans, Dipl.-Phys. Dr.

(56) Entgegenhaltungen:
- EP-A- 0 078 421
- EP-A- 0 177 213
- FR-A- 1 271 581
- FR-A- 2 449 304
- US-A- 3 744 124
- PATENT ABSTRACTS OF JAPAN vol. 7, no. 16 (M-187)22. Januar 1983 & JP-A-57 173 441
- PATENT ABSTRACTS OF JAPAN vol. 13, no. 519 (M-895)20. November 1989& JP-A-01 210 207
- PATENT ABSTRACTS OF JAPAN vol. 7, no. 246 (M-253)(1391) 2. November 1983 & JP-A-58 132 441
- INDUSTRIE ANZEIGER Nr. 75, 19. September 1984, Seiten 55 - 56 PASCHER M. 'Kompensation Thermischer Bedingter Verlagerungen an Werkzeugmaschinen'
- WERKSTATTSTECHNIK, ZEITSCHRIFT FUR INDUSTRIELLE FERTIGUNG Bd. 75, Nr. 6, Juni 1985, STUTTGART DE Seiten 371 - 376 A. BEHRENS & M. BRüSTLE 'Numerisch Fehlerkompensation an NC-Werkzeugmaschinen'

## Beschreibung

Die Erfindung betrifft eine Werkzeugmaschine mit einer automatischen Wärmedehnungs-Kompensationseinrichtung, mit einem an einem Maschinenständer verfahrbaren Schlitten, der mit einem Spindelantrieb zur Aufnahme von Werkzeugen und/oder Bearbeitungsköpfen versehen ist, wobei die Kompensationseinrichtung mit wenigstens einem ersten Temperaturfühler am Maschinenständer und wenigstens einem zweiten Temperaturfühler am Schlitten verbunden ist und in Abhängigkeit der Signale der Temperaturfühler einen Korrekturwert ermittelt und diesen zur Kompensation der Wärmedehnung dem Positionierantrieb für den Schlitten zuführt.

Eine derartige Wärmedehnungs-Kompensationseinrichtung an einer Werkzeugmaschine ist beispielsweise aus der US-A-35 79 073 bekannt. Bei dieser bekannten Werkzeugmaschine dient die Horizontalspindel eines horizontal verschiebbaren Schlittens zur Aufnahme von Werkzeugen, und die Positionserfassung über einen Positionsmaßstab wird in Abhängigkeit eines Temperatursignals am Schlitten und eines Referenztemperatursignals am Maschinenständer kompensiert. Bei vielen Werkzeugmaschinen können an die Spindel des Schlittens jedoch nicht nur Werkzeuge, sondern auch Bearbeitungsköpfe, z.B. Vertikalfräsköpfe, angekoppelt werden. In diesen herrschen durch den separaten Antrieb oft andere Temperaturverhältnisse vor, die durch die bekannte Kompensationseinrichtung nicht in befriedigender Weise kompensiert werden können.

In der EP 0 138 375 B1 wird hierzu für eine Zahnradstoßmaschine mit fest am Schlitten montiertem Vertikalbearbeitungskopf vorgeschlagen, in diesem eine Abstandsmeßvorrichtung für den Abstand zwischen einer bestimmten Stelle im Vertikalkopf und seiner Montagestelle am Schlitten anzuordnen, jedoch wird hierzu eine aufwendige Meßvorrichtung benötigt, und dem Temperaturmeß- und Kompensationskreis muß noch ein Abstandsmeß- und Kompensationskreis zugeordnet werden, was den Gesamtaufwand erhöht. Darüber hinaus sind maschinenbedingt auch keine Maßnahmen vorgesehen, um eine Anpassung der Wärmedehnungs-Kompensation bei abgenommenem oder abgeschwenktem Kopf vorzunehmen.

Eine Aufgabe der vorliegenden Erfindung besteht daher darin, eine Wärmedehnungs-Kompensationseinrichtung für eine Werkzeugmaschine der eingangs genannten Gattung zu schaffen, bei der in einfacher und einheitlicher Weise auch die Wärmedehnung in einem ankoppelbaren Bearbeitungskopf in Abhängigkeit von dessen angekoppeltem oder nicht angekoppeltem Zustand berücksichtigt wird.

Diese Aufgabe wird erfindungsgemäß dadurch gelöst, daß in wenigstens einem an den Spindelantrieb des Schlittens ankoppelbaren Bearbeitungskopf ein weiterer Temperaturfühler vorgesehen ist, dessen Signal zur zusätzlichen Korrektur der Wärmeausdehnung des Bearbeitungskopfes der Kompensationseinrichtung zuführbar ist, und daß Mittel zur Erkennung der Ankoppelung des Bearbeitungskopfes vorgesehen sind, durch die im nicht angekoppelten Zustand die zusätzliche Korrektur verhindert wird.

Moderne Werkzeugmaschinen, insbesondere Fräsmaschinen, besitzen häufig auswechselbare Bearbeitungsköpfe, wobei zum Horizontalfräsen beispielsweise ein Vertikalkopf abgeschwenkt und an seine Stelle ein Fräswerkzeug eingesetzt wird. Dies wird von der erfindungsgemäßen Kompensationseinrichtung automatisch erkannt, und es erfolgt eine automatische Umschaltung auf einen anderen Kompensationsvorgang. Hierbei ist es unerheblich, ob an der Leitung zum Temperaturfühler im Bearbeitungskopf noch Signale anliegen oder nicht. Die Verbindung zum weiteren Temperaturfühler im Bearbeitungskopf kann somit wahlweise beim Wegschwenken des Kopfs beibehalten oder unterbrochen werden. In beiden Fällen ist gewährleistet, daß der weitere Temperaturfühler keinen Einfluß mehr auf den Kompensationsvorgang ausübt. Der Konstrukteur hat daher freiere Hand bei der Auslegung der Gesamtanordnung. Ein weiterer Vorteil besteht darin, daß ausschließlich Temperatursensoren mit der Kompensationseinrichtung verbunden sind. Hierzu sind relativ einfache Kompensationsverfahren und kostengünstige Sensoren verwendbar.

Durch die in den Unteransprüchen aufgeführten Maßnahmen sind vorteilhafte Weiterbildungen und Verbesserungen der im Anspruch 1 angegebenen Werkzeugmaschine möglich.

Der Kompensationsvorgang erfolgt in einfacher Weise dadurch, daß in der Kompensationseinrichtung Rechenmittel zur Bildung des Korrekturwerts in Abhängigkeit der Signale des ersten und zweiten und bei angekoppeltem Bearbeitungskopf auch des weiteren Temperaturfühlers nach einer vorgebbaren Funktion vorgesehen sind, und daß ein durch den Korrekturwert korrigiertes Positionssignal einer Positionssteuer- oder -regeleinrichtung dem Positionsantrieb des Schlittens zuführbar ist. Dabei ergeben sich besonders einfache Algorithmen dadurch, daß der Korrekturwert aus zwei Korrekturteilwerten zusammengesetzt ist, von denen der erste eine festgelegte Funktion der Signale des ersten und zweiten Temperaturfühlers und der zweite eine festgelegte Funktion der Signale des ersten und des weiteren Temperaturfühlers ist, wobei bei abgekoppeltem Bearbeitungskopf der zweite Korrekturteilwert unberücksichtigt bleibt.

Eine kompakte und nur einen sehr geringen Hardware-Aufwand benötigende Kompensationseinrichtung ist zweckmäßigerweise in der Positionssteuer- oder -regeleinrichtung enthalten. Diese kann als programmgesteuerter Rechner, insbesondere als NC-Steuereinrichtung, ausgebildet sein.

In vorteilhafter Weise können auch wenigstens zwei verschiedene ankoppelbare Bearbeitungsköpfe vorgesehen sein, deren Temperaturfühler jeweils mit einer spezifischen Signalanpaßeinrichtung für das Temperatursignal versehen ist. Hierdurch wird beim Auswechseln des Bearbeitungskopfes ohne Eingriff in die Elektronik der Kompensationseinrichtung automatisch wieder eine korrekte Temperaturkompensation durchgeführt. Dabei können die Mittel zur Erkennung der Ankoppelung in einfacher und kostengünstiger Weise als Tastschalter ausgebildet sein.

Eine alternative Möglichkeit besteht darin, daß ein Codierfühler zur Erkennung des jeweils angekoppelten Bearbeitungskopfes vorgesehen ist, wobei in Abhängigkeit der abgefühlten Codierung zwischen verschiedenen Korrekturfunktionen umgeschaltet wird.

Der weitere Temperaturfühler ist zweckmäßigerweise im Lagerbereich des Bearbeitungskopfes angeordnet, da dort die höchsten Temperaturen auftreten.

Der zweite Temperaturfühler ist zweckmäßigerweise im Bereich eines Positionsmaßstabs zur Positions-Istwert-Erkennung am Schlitten angeordnet. Hierdurch ist eine automatische Temperaturkompensation des Istwert-Signals gewährleistet. Dabei kann der zweite Temperaturfühler insbesondere an oder oberhalb der am nächsten zur Ankoppelstelle gelegenen Maßstabsaufhängung angeordnet sein.

Um auch bei schnellen Bearbeitungsvorgängen immer eine temperaturkompensierte Position des Werkzeugs zu erhalten, weist die Kompensationseinrichtung Mittel zur zyklischen Ermittlung des Korrekturwerts in Intervallen von weniger als 100 ms, vorzugsweise 20 ms, auf.

Um eine fehlerhafte Temperaturkompensation durch defekte Temperaturfühler zu verhindern, weist die Kompensationseinrichtung Mittel zur Erkennung einer Über- und Unterschreitung von festlegbaren Temperaturgrenzwerten und zur Abschaltung der Temperaturkorrektur bei einer solchen Über- oder Unterschreitung durch Signale wenigstens eines der Temperaturfühler auf.

Ein Ausführungsbeispiel der Erfindung ist in der Zeichnung dargestellt und in der nachfolgenden Beschreibung näher erläutert. Es zeigen:
- Fig. 1: eine Seitenansicht einer Fräsmaschine mit einem am Schlitten angekoppelten Vertikalfräskopf und
- Fig. 2: ein Flußdiagramm zur Erläuterung der Wirkungsweise der Wärmedehnungs-Kompensationseinrichtung.

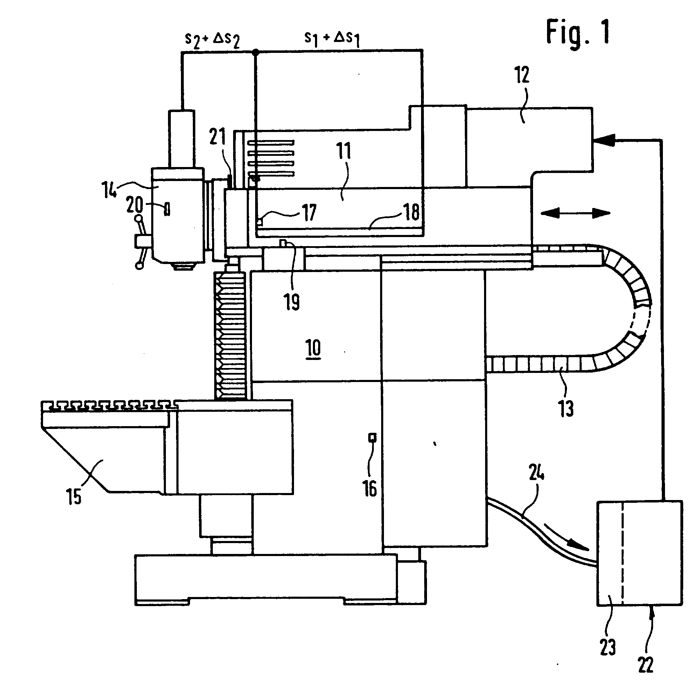

In Fig. 1 ist eine übliche Fräsmaschine schematisch dargestellt, wobei lediglich diejenigen Bauelemente beschrieben werden, die zur Erläuterung der vorliegenden Erfindung wesentlich sind. Auf einem Maschinenständer 10 (Basis) ist ein Schlitten 11 (Subbasis) horizontal verschiebbar gelagert. In diesem Schlitten 11 ist eine in der dargestellten Seitenansicht nicht sichtbare Horizontalspindel als Antriebsspindel angeordnet und wird von einem Antriebsmotor 12 angetrieben. Entsprechende Stromzuführungen und Steuerleitungen verlaufen vom Maschinenständer 10 aus über einen Gliederkanal 13 zum Schlitten 11. Am freien Ende der Horizontalspindel ist ein Vertikalfräskopf 14 angekoppelt, beispielsweise lösbar am Schlitten 11 angeflanscht. Dieser Vertikalfräskopf 14 kann in bekannter Weise abgeschwenkt werden, und er befindet sich dann seitlich des Schlittens 11. Nun kann ein Werkzeug direkt in die Horizontalspindel eingespannt werden, um Horizontalfräsungen oder -bohrungen vorzunehmen. Es ist auch möglich, mehrere verschiedene Fräsköpfe bzw. Bearbeitungsköpfe in entsprechender Weise auswechselbar am Schlitten 11 anzubringen.

Ein Werkstücktisch 15 ist im wesentlichen unterhalb des Vertikalfräskopfes 14 angeordnet und vertikal verschiebbar am Maschinenständer 10 gelagert.

Ein erster Temperaturfühler 16 ist zur Erfassung einer Referenztemperatur am Maschinenständer 10 angeordnet, der im wesentlichen die Umgebungstemperatur aufweist. Ein zweiter Temperaturfühler 17 ist am Schlitten 11 angeordnet, und zwar unmittelbar oberhalb einer vorderen Maßstabsaufhängung eines horizontal angeordneten Maßstabs 18. An dieser vorderen, zum Vertikalfräskopf 14 hinweisenden Maßstabsaufhängung ist der Maßstab 18 starr mit dem Schlitten 11 verbunden. Dieser Maßstab 18 dient zur Positionierung des Schlittens 11, wozu ein den Positions-Istwert am Maßstab 18 aufnehmender Positionssensor 19 am Maschinenständer 10 angeordnet ist.

Ein dritter Temperaturfühler 20 ist im Vertikalfräskopf 14 zur Erfassung der Temperatur im Lagerbereich dieses Vertikalfräskopfs 14 angeordnet. Schließlich ist noch ein Tastschalter 21 an der Koppelstelle zwischen dem Schlitten 11 und dem Vertikalfräskopf 14 angebracht, um das Vorhandensein des Vertikalfräskopfes 14 abzutasten. Hierfür kann auch ein anderer, kontaktlos oder mit Kontakten arbeitender Sensor vorgesehen sein.

Eine elektronische Steuervorrichtung 22 dient zur Steuerung und/oder Regelung der Bewegungen der Fräsmaschine. Hierbei kann es sich beispielsweise um eine NC-Steuerung handeln. In dieser elektronischen Steuervorrichtung 22 ist eine Wärmedehnungs-Kompensationseinrichtung 23 enthalten, der die Signale der drei Temperaturfühler 16,17,20 und das Signal des Tastschalters 21 über ein Kabel 24 zugeführt sind. Dabei kann die Kompensationseinrichtung 23 als separate Baugruppe oder als Programmteil im Steuerprogramm der Steuervorrichtung 22 enthalten sein. Dieser Steuervorrichtung 22 sind auch die erfaßten Istwerte für die verschiedenen Bewegungen der Maschine zugeführt. Entsprechend einer gewünschten Sollposition wird dann dem Antriebsmotor 12 von der Steuervorrichtung 22 ein Steuerbefehl zugeleitet. Selbstverständlich kann die Steuervorrichtung 22 in der Fräsmaschine eingebaut oder als separates Gerät ausgebildet sein.

Auf Grund der Temperaturentwicklung während des Betriebs infolge von Reibung an Lagern und Führungen, Reibung im Getriebe, Verlustwärme im Motor u.dgl. dehnen sich die einzelnen Komponenten, wie Vertikalfräskopf 14, Schlitten 11 und Maßstab 18, durch Wärmedehnung aus. Dies führt zu einer Relativbewegung zwischen Werkzeug und Werkstück, was sich somit direkt auf die Arbeitsgenauigkeit der Maschine auswirkt. Dabei müssen unterschiedliche Wärmedehnungen separat betrachtet werden: Die Ausdehnung des Spindelschlittens und des Maßstabs (s₁ + Δs₁) und die Ausdehnung zwischen der vorderen Maßstabsaufhängung und dem Vertikalfräskopf s₂ + Δs₂. Der erste Teil dieser Maßungenauigkeit wird durch die Ausdehnung des Maßstabs und des Spindelschlittens erzeugt. Die Ausdehnung des Spindelschlittens und des Maßstabs auf Grund der Erwärmung wirkt sich als Positionsversatz aus. Diese Ausdehnung ist eine Funktion der vom zweiten Temperaturfühler 17 erfaßten Temperatur in Relation zur Bezugstemperatur, die vom ersten Temperaturfühler 16 erfaßt wird, und der aktuellen Y-Position. Somit läßt sich in Abhängigkeit der aktuellen Y-Position des Schlittens 11 und der Temperaturen T₁ und T₂ nach einem Rechenalgorithmus ein Korrekturwert Y₁ ermitteln, durch den die Ausdehnung des Spindelschlittens und des Maßstabs korrigiert wird. Dieser Rechenalgorithmus hängt auch von der Dimensionierung der Maschine ab.

Die Ausdehnung zwischen der vorderen Maßstabsaufhängung und dem Vertikalfräskopf s₂ + Δs₂ kann nicht durch die Maßstabsaufhängung und die Temperaturkompensation des Maßstabs kompensiert werden, und diese weitere Maßungenauigkeit wirkt sich als Referenzversatz aus. Dieser hängt von der Temperatur T₃ im Vertikalfräskopf 14, die vom dritten Temperaturfühler 20 erfaßt wird, und von der Referenztemperatur T₁ ab. Auch hier kann wieder ein zweiter Korrekturwert Y₂ nach einem Rechenalgorithmus in Abhängigkeit der Temperaturen T₁ und T₃ ermittelt werden. Auch hier hängt der Rechenalgorithmus wiederum von der Dimensionierung der Maschine in diesem Bereich ab.

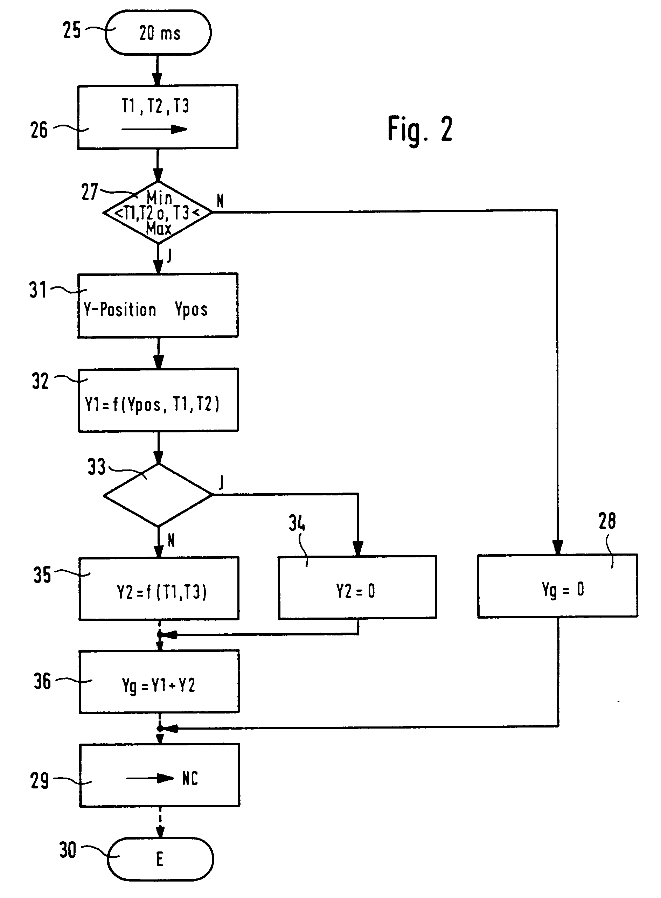

Der Ablauf der Temperaturkompensation soll nun im folgenden anhand des in Fig. 2 dargestellten Fluß-Diagramms erläutert werden. Zunächst erfolgt alle 20 ms ein Programmaufruf 25, um immer aktuelle Korrekturdaten zur Verfügung zu haben. Der angegebene Zyklus kann selbstverständlich entsprechend den Anforderungen auch variieren und länger oder kürzer sein. Nun werden im Programmschritt 26 die Temperaturwerte T₁, T₂ und T₃ der drei Temperaturfühler 16,17,20 eingelesen, indem die über Analogeingänge anliegenden Signale digitalisiert dem Prozessor zugeführt werden. In der Programmverzweigung 27 erfolgt nun eine Überprüfung der Temperaturwerte daraufhin, ob ein minimal zulässiger Wert unterschritten oder ein maximal zulässiger Wert durch einen der drei Temperaturwerte überschritten ist. Liegt einer der drei Temperaturwerte außerhalb des zulässigen Bereichs, so bedeutet dies, daß einer der Temperaturfühler oder eine Leitung oder eine sonstige Komponente defekt ist, und im Programmschritt 28 wird der Gesamtkorrekturwert Y_{g} auf den Wert Null gesetzt, die Temperaturkompensation also abgeschaltet. Für den weiteren Programmablauf werden also die Positions-Istwert-Signale des Positionssensors 19 im Programmschritt 29 der Steuervorrichtung 22 unkorrigiert zugefügt, um wenigstens einen Notbetrieb der Maschine mit verringerter Genauigkeit aufrechtzuerhalten. Gleichzeitig wird in nicht dargestellter Weise ein optisches und/oder akustisches Warnsignal erzeugt. Der Programmdurchlauf ist dann mit dem Programmschritt 30 beendet und beginnt wieder zyklisch mit dem Programmaufruf 25.

Liegen bei der Programmverzweigung 27 nur zulässige Temperaturwerte vor, so wird im Programmschritt 31 die Y-Position, also die Horizontalposition des Schlittens 11, mittels des Posionssensors 19 referenzpunktbezogen eingelesen. Nun wird im Programmschritt 32 gemäß einem ersten Rechenalgorithmus ein erster Korrekturwert Y₁ gebildet, wie dies vorstehend bereits beschrieben wurde, um die Ausdehnung des Spindelschlittens und des Maßstabes zu kompensieren. Danach wird in einer weiteren Programmverzweigung 33 abgefragt, ob ein Bearbeitungskopf, also beispielsweise der Vertikalfräskopf 14, am Schlitten 11 angekoppelt ist oder ob er weggeschwenkt ist. Liegt der weggeschwenkte Zustand vor und ist somit ein Werkzeug direkt in die Horizontalspindel des Schlittens 11 eingesetzt, so wird durch ein entsprechendes Signal des Tastschalters 21 im Programmschritt 34 der zweite Korrekturwert Y₂ auf den Wert Null gesetzt. Im anderen Falle, also bei angekoppeltem Vertikalfräskopf 14, wird im Programmschritt 35 der zweite Korrekturwert Y₂ als Funktion der Temperaturwerte T₁ und T₃ gebildet. Dieser zweite Korrekturwert dient zur Kompensation der Ausdehnung zwischen der vorderen Maßstabsaufhängung und dem Vertikalfräskopf. Die beiden Korrekturwerte Y₁ und Y₂ werden dann im Programmschritt 36 zu einem Gesamtkorrektur wert Y_{g} addiert und im Programmschritt 29 der Steuervorrichtung 22 zugeführt.

Alternativ zum beschriebenen Ausführungsbeispiel kann selbstverständlich auch anhand eines umfassenden Rechenalgorithmus direkt der Gesamtkorrekturwert Y_{g} aus den genannten einzelnen Werten bestimmt werden.

Sollen verschiedene Bearbeitungsköpfe mit unterschiedlichen Funktionen, Dimensionierung od.dgl. alternativ an den Schlitten 11 angeflanscht werden, so ist in jedem dieser Bearbeitungsköpfe ein Temperaturfühler enthalten, der mit einer entsprechenden Codier- bzw. Anpassungsschaltung versehen ist, um die unterschiedlichen Bedingungen, wie Dimensionierungen, auszugleichen. Auf diese Weise kann in der Steuervorrichtung 22 immer dasselbe Programm ablaufen, und die jeweiligen Bedingungen der verschiedenen Bearbeitungsköpfe werden durch die Ausgleichsschaltung in den jeweiligen Bearbeitungsköpfen ausgeglichen.

In einer alternativen Ausführung kann anstelle des Tastschalters 21 auch ein Codierfühler vorgesehen sein, durch den der jeweils angekoppelte Bearbeitungskopf identifiziert wird. In Abhängigkeit dieser Identifizierung wird dann in der Steuervorrichtung 22 zwischen verschiedenen Programmabläufen umgeschaltet, die den jeweiligen Bedingungen des betreffenden Bearbeitungskopfes Rechnung tragen. Dies betrifft selbstverständlich nur den Korrekturwert Y₂. In diesem Falle kann auf Anpassungsschaltungen in den Bearbeitungsköpfen verzichtet werden.

Die Erfindung ist selbstverständlich nicht auf Horizontalschlitten von Fräsmaschinen beschränkt, sondern sie umfaßt vielmehr alle beweglichen Schlitten an Werkzeugmaschinen, die exakt positioniert werden müssen und die einen zusätzlichen Bearbeitungskopf tragen.

## Patentansprüche

1. Werkzeugmaschine mit einer automatischen Wärmedehnungs-Kompensationseinrichtung, mit einem an einem Maschinenständer (10) verfahrbaren Schlitten (11), der mit einem Spindelantrieb zur Aufnahme von Werkzeugen und/oder Bearbeitungsköpfen versehen ist, wobei die Kompensationseinrichtung mit wenigstens einem ersten Temperaturfühler (16) am Maschinenständer (10) und wenigstens einem zweiten Temperaturfühler (17) am Schlitten (11) verbunden ist und in Abhängigkeit der Signale der Temperaturfühler einen Korrekturwert ermittelt und diesen zur Kompensation der Wärmedehnung dem Positionierantrieb für den Schlitten zuführt, dadurch gekennzeichnet, daß in wenigstens einem an den Spindelantrieb des Schlittens (11) ankoppelbaren Bearbeitungskopf (14) ein weiterer Temperaturfühler (20) vorgesehen ist, dessen Signal zur zusätzlichen Korrektur der Wärmeausdehnung des Bearbeitungskopfes (14) der Kompensationseinrichtung (23) zuführbar ist, und daß Mittel (21) zur Erkennung der Ankoppelung des Bearbeitungskopfes (14) vorgesehen sind, durch die im nicht angekoppelten Zustand die zusätzliche Korrektur verhindert wird.

2. Werkzeugmaschine nach Anpruch 1, dadurch gekennzeichnet, daß in der Kompensationseinrichtung (23) Rechenmittel zur Bildung eines Korrekturwerts (Y_{g}) in Abhängigkeit der Signale des ersten (16) und zweiten (17) und bei angekoppeltem Bearbeitungskopf (14) auch des weiteren Temperaturfühlers (20) nach einer vorgegebenen Funktion vorgesehen sind, und daß ein durch den Korrekturwert (Y_{g}) korrigiertes Positionssignal einer Positionssteuer- oder -regeleinrichtung (22) dem Positionsantrieb (12) des Schlittens (11) zuführbar ist.

3. Werkzeugmaschine nach Anspruch 2, dadurch gekennzeichnet, daß der Korrekturwert (Y_{g}) aus zwei Korrekturteilwerten (Y₁, Y₂) zusammengesetzt ist, von denen der erste (Y₁) eine festgelegte Funktion der Signale des ersten und zweiten Temperaturfühlers (16,17) und der Istwert-Position und der zweite (Y₂) eine festgelegte Funktion der Signale des ersten und des weiteren Temperaturfühlers (16,20) ist, wobei bei abgekoppeltem Bearbeitungskopf (14) der zweite Korrekturteilwert (Y₂) unberücksichtigt bleibt.

4. Werkzeugmaschine nach Anspruch 2 oder 3, dadurch gekennzeichnet, daß die Kompensationseinrichtung (23) in der Positionssteuer- oder -regeleinrichtung (22) enthalten ist.

5. Werkzeugmaschine nach Anspruch 4, dadurch gekennzeichnet, daß die Positionssteuer- oder -regeleinrichtung (22) als programmgesteuerter Rechner ausgebildet ist.

6. Werkzeugmaschine nach einem der vorhergehenden Ansprüche, dadurch gekennzeichnet, daß wenigstens zwei verschiedene ankoppelbare Bearbeitungsköpfe (14) vorgesehen sind, deren Temperaturfühler (20) jeweils mit einer spezifischen Signalanpaßeinrichtung für das Temperatursignal versehen sind.

7. Werkzeugmaschine nach einem der vorhergehenden Ansprüche, dadurch gekennzeichnet, daß die Mittel (21) zur Erkennung der Ankoppelung als Tastschalter ausgebildet sind.

8. Werkzeugmaschine nach einem der Ansprüche 1 bis 5, dadurch gekennzeichnet, daß ein Codierfühler zur Erkennung des jeweils angekoppelten Bearbeitungskopfes und zur entsprechenden Umschaltung zwischen verschiedenen Korrekturfunktionen vorgesehen ist.

9. Werkzeugmaschine nach einem der vorhergehenden Ansprüche, dadurch gekennzeichnet, daß der weitere Temperaturfühler (20) im Lagerbereich des Bearbeitungskopfes (14) angeordnet ist.

10. Werkzeugmaschine nach einem der vorhergehenden Ansprüche, dadurch gekennzeichnet, daß der zweite Temperaturfühler (17) im Bereich eines Positionsmaßstabs (18) zur Positions-Istwert-Erfassung am Schlitten (11) angeordnet ist.

11. Werkzeugmaschine nach Anspruch 10, dadurch gekennzeichnet, daß der zweite Temperaturfühler (17) an oder oberhalb der am nächsten zur Ankoppelstelle gelegenen Maßstabsaufhängung angeordnet ist.

12. Werkzeugmaschine nach einem der vorhergehenden Ansprüche, dadurch gekennzeichnet, daß die Kompensationseinrichtung (23) Mittel zur zyklischen Ermittlung des Korrekturwerts in Intervallen von weniger als 100 ms, vorzugsweise 20 ms, aufweist.

13. Werkzeugmaschine nach einem der vorhergehenden Ansprüche, dadurch gekennzeichnet, daß die Kompensationseinrichtung (23) Mittel zur Erkennung einer Über- und Unterschreitung von festlegbaren Temperaturgrenzwerten und zur Abschaltung der Temperaturkorrektur bei einer solchen Über- und Unterschreitung durch Signale wenigstens eines der Temperaturfühler aufweist.

14. Werkzeugmaschine nach einem der vorhergehenden Ansprüche, dadurch gekennzeichnet, daß sie als Fräsmaschine ausgebildet ist und daß wenigstens ein Bearbeitungskopf (14) ein Vertikalfräskopf ist.

## Claims

1. Machine tool with an automatic thermal expansion compensating device, with a slide (11) traversable on a machine column (10) and provided with a spindle drive to accommodate tools and/or machining heads, wherein the compensation device is linked to at least a first temperature sensor (16) on the machine column (10) and at least a second temperature sensor (17) on the slide (11), and determines a correction factor depending on the signals from the temperature sensors, feeding this to the positioning drive for the slide to compensate for thermal expansion, characterized in that a further temperature sensor is provided in at least one machining head (14) connected to the spindle drive of the slide (11), with its signal being feedable to the compensation device (23) for additional correction of the thermal expansion of the machining head (14), and that means (21) are provided for recognizing the coupling of the machining head (14) and preventing the additional correction in the non-coupled state.

2. Machine tool according to claim 1, characterized in that means of computing are provided in the compensation device (23) to form a correction factor (Y_{g}) depending on the signals of the first (16) and second (17), and with a coupled machining head (14) also the additional temperature sensor (20), according to a preset function, and that a position signal of a positioning control system (22) as corrected by the correction factor (Y_{g}) can be fed to the positioning drive (12) of the slide (11).

3. Machine tool according to claim 2, characterized in that the correction factor (Y_{g}) is comprised of two correction sub-factors (Y₁, Y₂), of which the first (Y₁) is a fixed function of the signals of the first and second temperature sensors (16, 17) and the actual value-position, and the second (Y₂) is a fixed function of the signals of the first and the additional temperature sensors (16, 20), with the second correction sub-factor being disregarded when the machining head (14) is uncoupled.

4. Machine tool according to claim 2 or 3, characterized in that the compensation device (23) is part of the positioning control system (22).

5. Machine tool according to claim 4, characterized in that the positioning control system (22) is in the form of a program-controlled computer.

6. Machine tool according to any of the preceding claims, characterized in that at least two different machining heads (14) which can be coupled are provided, and that their temperature sensors (20) are each provided with a specific signal adapter for the temperature signal.

7. Machine tool according to any of the preceding claims, characterized in that the means (21) for recognizing the coupling are in the form of push-button switches.

8. Machine tool according to any of claims 1 to 5, characterized in that a coding sensor for recognizing the respectively-coupled machining head and for corresponding switching between different correction functions is provided.

9. Machine tool according to any of the preceding claims, characterized in that the additional temperature sensor (20) is located in the bearing zone of the machining head (14).

10. Machine tool according to any of the preceding claims, characterized in that the second temperature sensor (17) is located on the slide (11) in the vicinity of a position scale (18) for determining the position actual value.

11. Machine tool according to claim 10, characterized in that the second temperature sensor (17) is located on or above the scale mounting nearest to the coupling point.

12. Machine tool according to any of the preceding claims, characterized in that the compensation device (23) has means for cyclical determination of the correction factor at intervals of less than 100 ms, preferably 20 ms.

13. Machine tool according to any of the preceding claims, characterized in that the compensation device (23) has means of detecting any over- and under-shooting of settable temperature limit values and of switching off the temperature correction in the event of any such over- and under-shooting by means of signals of one or more of the temperature sensors.

14. Machine tool according to any of the preceding claims, characterized in that it is in the form of a milling machine and that at least one machining head (14) is a vertical milling head.

## Revendications

1. Machine-outil comportant un dispositif de compensation automatique de la dilatation thermique, un chariot (11) mobile sur un support de machine (10), chariot qui est muni d'un mécanisme à broche destiné à recevoir des outils et/ou des têtes d'usinage, le dispositif de compensation étant relié à au moins un premier capteur de température (16) sur le support de machine (10) et au moins un deuxième capteur de température (17) sur le chariot (11) et déterminant une valeur de correction en fonction des signaux des capteurs de température, et envoyant celle-ci au mécanisme de positionnement du chariot afin de compenser la dilatation thermique, caractérisée en ce que, dans au moins une tête d'usinage (14) pouvant être couplée au mécanisme de broche du chariot (11), il est prévu un autre capteur de température (20) dont le signal peut être envoyé au dispositif de compensation (23) pour effectuer une correction supplémentaire de la dilatation thermique de la tête d'usinage (14), et en ce que des moyens (21) de détection du couplage de la tête d'usinage (14) sont prévus, par lesquels la correction supplémentaire est empêchée à l'état non-couplé.

2. Machine-outil selon la revendication 1, caractérisée en ce que, dans le dispositif de compensation (23), il est prévu des moyens de calcul destinés à former selon une fonction prédéterminée une valeur de correction (Y_{g}) en fonction des signaux des premier (16) et deuxième (17) capteurs de température, et de l'autre capteur de température (20) lorsque la tête d'usinage (14) est accouplée, et en ce qu'un signal de position, corrigé par la valeur de correction (Y_{g}), d'un dispositif (22) de régulation ou de commande de position peut être envoyé au mécanisme de position (12) du chariot (11).

3. Machine-outil selon la revendication 2, caractérisée en ce que la valeur de correction (Y_{g}) est composée de deux valeurs partielles de correction (Y₁, Y₂), dont la première (Y₁) est une fonction déterminée des signaux des premier et deuxième capteurs de température (16, 17) ainsi que de la valeur réelle de position, et la deuxième (Y₂) est une fonction déterminée des signaux du premier et de l'autre capteur de température (16, 20), la deuxième valeur partielle de correction (Y₂) n'étant pas prise en compte lorsque la tête d'usinage (14) est découplée.

4. Machine-outil selon la revendication 2 ou 3, caractérisée en ce que le dispositif de compensation (23) est contenu dans le dispositif de régulation ou de commande de position (22).

5. Machine-outil selon la revendication 4, caractérisée en ce que le dispositif de régulation ou de commande de position (22) est conformé en calculateur à commande programmée.

6. Machine-outil selon l'une quelconque des revendications précédentes, caractérisée en ce qu'au moins deux têtes d'usinage pouvant être couplées (14) différentes sont prévues, dont les capteurs de température (20) sont munis chacun d'un dispositif d'adaptation de signal spécifique pour le signal de température.

7. Machine-outil selon l'une quelconque des revendications précédentes, caractérisée en ce que les moyens (21) de détection du couplage sont conformés en poussoir.

8. Machine-outil selon l'une des revendications 1 à 5, caractérisée en ce qu'un détecteur de codage est prévu pour détecter la tête d'usinage respective accouplée et pour commuter entre diverses fonctions de correction.

9. Machine-outil selon l'une quelconque des revendications précédentes, caractérisée en ce que l'autre capteur de température (20) est placé dans la zone de palier de la tête d'usinage (14).

10. Machine-outil selon l'une quelconque des revendications précédentes, caractérisée en ce que le deuxième capteur de température (17) est placé de au niveau d'une échelle de position (18) destinée à la détection de la valeur réelle de position sur le chariot (11).

11. Machine-outil selon la revendication 10, caractérisée en ce que le deuxième capteur de température (17) est placé sur ou au-dessus de la suspension d'échelle située au plus près du point d'accouplement.

12. Machine-outil selon l'une quelconque des revendications précédentes, caractérisée en ce que le dispositif de compensation (23) présente des moyens de détermination cyclique de la valeur de correction à des intervalles de moins de 100 ms, de préférence 20 ms.

13. Machine-outil selon l'une quelconque des revendications précédentes, caractérisée en ce que le dispositif de compensation (23) présente des moyens de détection d'un dépassement vers le haut ou le bas de valeurs limites de température imposables et d'interruption de la correction de température en cas de dépassement vers le haut ou vers le bas par des signaux d'au moins l'un des capteurs de température.

14. Machine-outil selon l'une quelconque des revendications précédentes, caractérisée en ce qu'elle est conformée en fraiseuse et en ce qu'au moins une tête d'usinage (14) est une tête de fraisage vertical.
